# EUROPÄISCHE PATENTSCHRIFT

(11) **EP 0 767 746 B1**
(45) Veröffentlichungstag und Bekanntmachung des Hinweises auf die Patenterteilung: **23.09.1998**
(21) Anmeldenummer: 95923274.5
(22) Anmeldetag: 08.06.1995
(51) Int. Cl.: B60S 1/34

(54) **SCHEIBENWISCHVORRICHTUNG MIT WISCHWINKELABHÄNGIGER ANPRESSKRAFTVERSTELLUNG**
WINDSCREEN WIPER DEVICE WITH PRESSURE ADJUSTMENT DEPENDING ON THE WIPING ANGLE
SYSTEME ESSUIE-GLACE DONT LE REGLAGE DE LA FORCE DE PRESSION DEPEND DE L'ANGLE DE BALAYAGE

(30) Priorität: 08.07.1994 DE 4424076
(43) Veröffentlichungstag der Anmeldung: 16.04.1997
(73) Patentinhaber: ITT Automotive Europe GmbH, 60488 Frankfurt am Main (DE)
(72) Erfinder: BLACHETTA, Thomas, D-74080 Heilbronn (DE); EGNER-WALTER, Bruno, D-74076 Heilbronn (DE); BÜHL, Harro, D-74366 Kirchheim (DE)
(86) Internationale Anmeldenummer: EP9502220
(87) Internationale Veröffentlichungsnummer: WO9601754

(56) Entgegenhaltungen:
- WO-A-94/07712
- DE-A- 4 028 494

## Beschreibung

Die Erfindung bezieht sich auf eine Scheibenwischvorrichtung, insbesondere für Kraftfahrzeuge, mit den Merkmalen des Oberbegriffs des Anspruchs 1, bei welcher sich die Kraft, mit der das Wischblatt auf die zu reinigende Scheibe gepreßt wird, verändert. Diese Veränderung der Anpreßkraft vollzieht sich dabei in Abhängigkeit von der Position des Wischblattes innerhalb des pendelnd zu überstreichenden Wischfeldes, d.h. in Abhängigkeit vom jeweiligen Wischwinkel. Es ist gewünscht, daß für eine gute Wischqualität das Wischblatt im mittleren Bereich des Wischfeldes, welcher der hauptsächlichen Durchblickrichtung des Fahrers entspricht, mit einer großen Kraft auf die zu reinigende Scheibe gepreßt wird. Am Anfang und am Ende des Wischfeldes, d.h. in den äußeren Endlagen des Wischarmes, in welchen jeweils die Bewegungsrichtung des Wischblattes umgekehrt wird, soll hingegen die Anpreßkraft des Wischblattes gering sein. Damit wird das Umkippen der Wischlippe in die jeweils andere Lage erleichtert, was zu einer geringeren Beanspruchung der Wischleiste und zur Verringerung der Umschlaggeräusche beiträgt.

Aus der DE-A-40 28 494 ist bereits eine Scheibenwischvorrichtung mit einer Verstelleinrichtung für eine wischwinkelabhängige Änderung des Anpreßdruckes bekannt. Hierbei umfaßt die Verstelleinrichtung eine Kulisse, welche ortsfest an dem Lagergehäuse der Wischerwelle befestigt ist, und einen Verstellhebel, der in Richtung auf die zu reinigende Scheibe schwenkbar an dem Befestigungsteil des Scheibenwischers gelagert ist. Die Kulisse ist an ihrer Oberseite, d.h. der von der zu reinigenden Scheibe abgewandten Seite, mit einer Steuerkurve ausgestattet, die von dem kulissenseitigen Ende des Verstellhebels bei der Schwenkbewegung des Wischarmes abgefahren wird. Am gegenüberliegenden Ende ist eine als Zugfeder ausgebildete Anpreßfeder festgelegt, deren anderes Ende an dem Gelenkteil oder der Wischstange des Wischarmes angelenkt ist. Beim Abfahren der Steuerkurve wird der Verstellhebel unterschiedlich ausgelenkt, wodurch die Wirklinie der Anpreßfeder verlagert wird. Letztgenannte Verlagerung bewirkt die gewünschte Änderung der Anpreßkraft.

Nachteilig an dieser Scheibenwischvorrichtung ist, daß das kulissenseitige Ende des Verstellhebels mit relativ großer Kraft gegen die Steuerkurve der Kulisse gepreßt wird. Durch diese große Flächenpressung wird der Bewegungswiderstand des Wischarmes stark erhöht, so daß eine größere Antriebskraft in die Wischerwelle eingeleitet werden muß. Außerdem verändert sich diese Flächenpressung in Abhängigkeit von der Gestaltung der Steuerkurve, was den gleichmäßigen Ablauf der Wischbewegung stört.

Nachteilig ist auch, daß die Kulisse als Bauteil dem Wischlager zugeordnet ist und mit diesem an der Fahrzeugkarosserie befestigt ist. Bei der Montage des Wischarmes auf dem Rändelkonus der Wischerwelle kann das Befestigungsteil aufgrund unterschiedlich starker Anzugsmomente der Befestigungsmutter oder von Abmessungstoleranzen des Aufnahmekonus unterschiedlich weit axial aufgepreßt werden. Dadurch kann die Grundeinstellung der Anpreßkraft sehr unterschiedlich sein, oder es muß zusätzlich eine geeignete Justierung vorgenommen werden, was einen zusätzlichen Aufwand erfordert. Letztendlich ist die Kulisse bzw. deren Steuerkurve gegenüber Umwelteinflüssen ungeschützt.

Aus der EP-A-0 487 859 ist eine Scheibenwischvorrichtung bekannt, deren Verstelleinrichtung ähnlich wie in der zitierten DE-A-40 28 494 aufgebaut ist. Allerdings ist hierbei die Kulisse nicht ortsfest angeordnet, sondern durch einen separaten Antrieb konzentrisch in einem bestimmten Bereich um die geometrische Achse der Wischerwelle verdrehbar. Damit kann die Anpreßkraft des Wischblattes auf die zu reinigende Scheibe in Abhängigkeit von der Fahrgeschwindigkeit des Fahrzeuges verändert werden. Außerdem ist hier die Steuerkurve an der Unterseite der Kulisse vorgesehen, so daß das kulissenseitige Ende des Verstellhebels von unten auf der Steuerkurve aufliegt. Im übrigen treffen für diese Scheibenwischvorrichtung ebenfalls die zur DE-A-40 28 494 genannten Nachteile zu.

Aufgabe der vorliegenden Erfindung ist es, die Funktionssicherheit der Scheibenwischvorrichtung mit wischwinkelabhängiger Anpreßkraftverstellung zu verbessern und die Gleichmäßigkeit der Wischbewegung des Wischblattes auf der zu reinigenden Scheibe zu erhöhen.

Erfindungsgemäß wird die Aufgabe durch eine Scheibenwischvorrichtung mit den Merkmalen des Oberbegriffs des Anspruchs 1 gelöst, bei welcher die Kulisse zwei zueinander synchron verlaufende Steuerkurven aufweist, die in bezug auf die Wischerwelle axial an der Kulisse angeordnet sind. Weiterhin ist der kulissenseitige Abschnitt des Verstellhebels gabelförmig ausgebildet, so daß dieses Ende des Verstellhebels von zwei Gabelschenkeln gebildet wird. Jeder Gabelschenkel steht mit der ihm zugeordneten Steuerkurve der Kulisse in Wirkverbindung. Durch die gabelförmige Aufteilung des die Steuerkurve abfahrenden Endes des Verstellhebels wird an jedem Gabelschenkel die auf die Steuerkurve wirkende Flächenpressung erheblich verringert, was zu einer Verringerung des Bewegungswiderstandes des Wischarmes führt. Der Anteil der Antriebskraft der Wischerwelle, welcher für die Überwindung des Reibungswiderstandes der Gabelschenkel auf den Steuerkurven verbraucht wird, ist sehr gering. Damit wird der Einfluß der Verstelleinrichtung für die Anpreßkraft auf die Gleichmäßigkeit der Wischbewegung vernachlässigbar gering, und die Funktionssicherheit der Scheibenwischvorrichtung wird erhöht.

Vorteilhafte Ausgestaltungen der Erfindung sind in den Ansprüchen 2 bis 10 beschrieben.

Für eine ständige einwandfreie Funktion der wischwinkelabhängigen Anpreßkraftverstellung wird durch die Merkmale des Anspruchs 2 gewährleistet, daß sich die Gabelschenkel des Verstellhebels permanent in Wirkverbindung mit den Steuerkurven der Kulisse befinden.

Als vorteilhaft hat es sich erwiesen, wenn die Gabelschenkel des Verstellhebels gemäß Anspruch 3 mit Gleitschuhen ausgestattet sind, welche auf den Steuerkurven aufliegen und beim Betrieb der Scheibenwischvorrichtung auf den Steuerkurven gleiten. Von besonderem Vorteil für die Erzielung eines besonders geringen Reibungswiderstandes und eines geringen Abriebes ist es, wenn gemäß Anspruch 4 die Gleitschuhe aus einem Kunststoff, insbesondere aus einem Polyamid, und die Kulisse bzw. die Steuerkurven der Kulisse aus einem dazu verschiedenen Kunststoff, insbesondere aus einem Acetal-Copolymerisat, bestehen. Diese Materialpaarung gewährleistet eine optimale Wischqualität.

Für die Erzielung einer möglichst geringen Bauhöhe bei gleichzeitiger Anpassung der Geometrie der Scheibenwischvorrichtung an die durch den Fahrzeugaufbau vorgegebenen geometrischen Bedingungen wird eine Ausbildung der Scheibenwischvorrichtung gemäß Anspruch 5 empfohlen.

Wenn bei einer erfindungsgemäßen Scheibenwischvorrichtung ein etwas größerer Abstand zwischen den Gabelschenkeln und den Steuerkurven der Kulisse überwunden werden muß, sollten die Gabelschenkel gemäß Anspruch 6 an ihren Enden einen in Richtung auf die Steuerkurve umgebogenen oder abgewinkelten Bereich aufweisen. In diesem Fall sind die Gleitschuhe stirnseitig an den umgebogenen bzw. abgewinkelten Enden der Gabelschenkel befestigt.

Gemäß Anspruch 7 wird vorgeschlagen, das Befestigungsteil und den Wischarm zusammen mit der Anpreßfeder und der Verstelleinrichtung des Anpreßdruckes als eine vormontierte Baueinheit auszubilden. Eine solche Baueinheit ist bei der Montage an das Fahrzeug gut zu handhaben, was die Montage erheblich vereinfacht. Eine spezielle Möglichkeit der Ausgestaltung als vormontierte Baueinheit ist im Anspruch 8 beschrieben.

Im Anspruch 9 ist ein kostengünstig herstellbare Ausführung einer erfindungsgemäßen Scheibenwischvorrichtung beschrieben, welche eine optimale Funktion gewährleistet.

Mit der im Anspruch 10 beschriebenen Labyrinthdichtung zwischen Befestigungsteil und Kulisse wird verhindert, daß störender Schmutz auf die Gleitflächen der Steuerkurven bzw. der Gabelschenkel oder der daran angebrachten Gleitschuhe gelangen kann.

Anhand von Ausführungsbeispielen wird die Erfindung nachfolgend näher beschrieben. In den zugehörigen Zeichnungen zeigen
- Fig. 1: eine Scheibenwischvorrichtung insgesamt, (in teilweise geschnittener Darstellung),
- Fig. 2: eine Draufsicht auf die Scheibenwischvorrichtung aus Fig. 1,
- Fig. 3: einen Abschnitt des Befestigungsteiles aus Fig. 2 ohne Verstellhebel,
- Fig. 4: eine Draufsicht auf den Verstellhebel der Verstelleinrichtung als Einzelheit aus Fig. 2, in vergrößerter Darstellung,
- Fig. 5: einen vergrößerten Abschnitt der Scheibenwischvorrichtung in Schnittdarstellung,
- Fig. 6: eine Abwicklung der Steuerkurven der Kulisse,
- Fig. 7: eine andere Ausführung einer erfindungsgemäßen Scheibenwischvorrichtung in Schnittdarstellung und
- Fig. 8: den Schnitt VIII-VIII aus Fig. 7, jedoch bei am Fahrzeug montierter Scheibenwischvorrichtung.

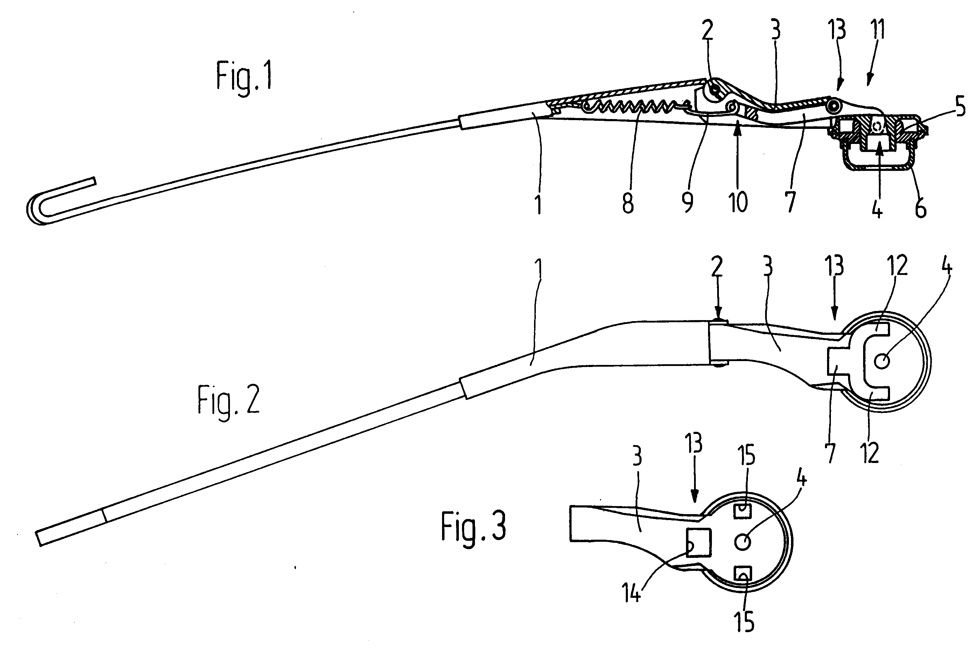

Die Fig. 1 bis 5 beziehen sich auf das gleiche Ausführungsbeispiel einer erfindungsgemäßen Scheibenwischvorrichtung, wobei die Fig. 1 und 2 einen Gesamtüberblick und die Fig. 3 bis 5 Details der Vorrichtung wiedergeben.

Die in den Fig. 1 und 2 abgebildete Scheibenwischvorrichtung ist noch nicht an einem Fahrzeug montiert. Der Wischarm 1, der aus einem Gelenkteil mit einer daran befestigten Wischstange besteht, ist mittels einer Schwenkachse 2 an dem Befestigungsteil 3 angelenkt. Das Befestigungsteil 3 ist mit einer Öffnung 4 versehen, die die drehfeste Montage des Befestigungsteiles 3 mittels einer nicht dargestellten Befestigungsmutter auf dem Ende einer nicht dargestellten, pendelnd antreibbaren Wischerwelle ermöglicht. Der am Befestigungsteil 3 angelenkte Wischarm 1 ist in Richtung auf die nicht dargestellte zu reinigende Scheibe schwenkbar. Die Scheibenwischvorrichtung ist als vormontierte Baueinheit ausgebildet, welche die Verstelleinrichtung für die wischwinkelabhängige Verstellung des Anpreßdruckes einschließt. Zu dieser Baueinheit gehören neben dem Wischarm 1 mit seinem Befestigungsteil 3 eine Kulisse 5 und ein schwenkbar an dem Befestigungsteil 3 gelagerter Verstellhebel 7. Eine als Anpreßfeder 8 wirkende Zugfeder ist mit einem Ende an dem Wischarm 1 und mit ihrem anderen Ende über einen Bügel 9 am diesseitigen Ende 10 des Verstellhebels 7 angelenkt. Ein Halteblech 6, welches zur Verdrehsicherung der Kulissee 5 am Wischlager oder an der Fahrzeugkarosserie dient, kann zu der beschriebenen Baueinheit gehören und gemeinsam mit dieser gehandhabt werden. Das Halteblech 6 kann auch separat an dem Wischlager oder der Fahrzeugkarosserie vormontiert sein, und die Kulisse 5 wird beim Anbau der Baueinheit mit dem Halteblech 6 in Eingriff gebracht.

Aus der Fig. 2 ist außerdem ersichtlich, daß der Verstellhebel 7 in seinem kulissenseiten Abschnitt 11 (Fig. 1) gabelförmig ausgebildet ist, so daß die zwei Gabelschenkel 12 gebildet werden. Im Bereich 13 des Schwenklagers des Verstellhebels 7 mit dem Befestigungssteil 3 ist das Befestigungsteil 3 abgekröpft bzw. abgestuft und weist dort den aus Fig. 3 ersichtlichen Durchbruch 14 auf, den der Verstellhebel 7 durchgreift. Weiterhin befinden sich an der Oberseite des Befestigungsteiles 3 die beiden Durchbrüche 15, die beiderseits der Öffnung 4 diametral gegenüberliegend auf einem verlängerten Durchmesser der Öffnung 4 angeordnet sind. Die nach unten abgebogenen Enden der Gabelschenkel 12 durchgreifen diese Durchbrüche 15 und gelangen so in Wirkverbindung mit der Kulisse 5.

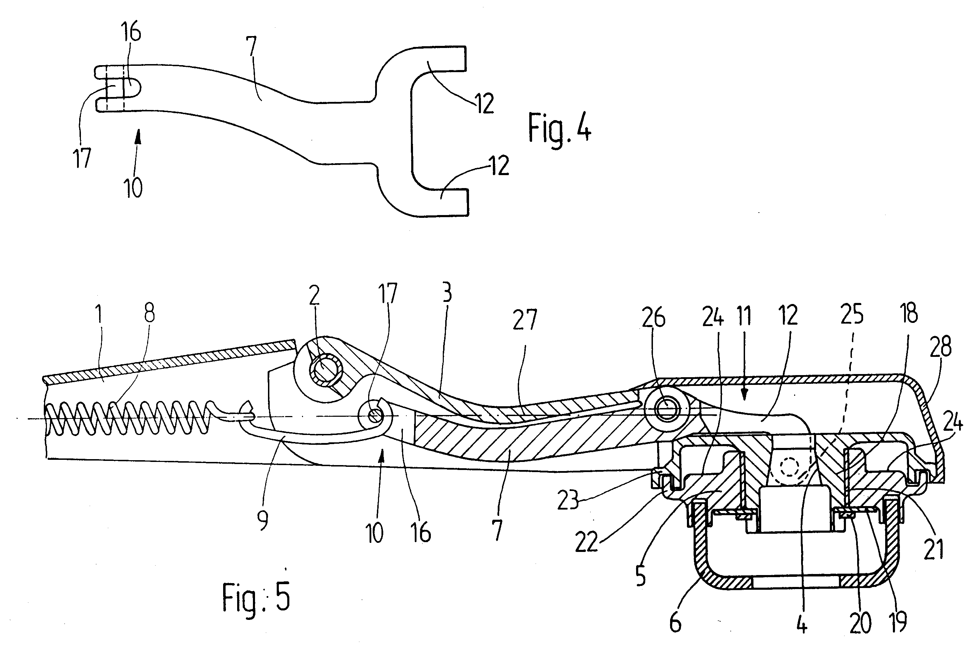

Die Gestalt des Verstellhebels 7, welche der Gestalt des Befestigungsteiles 3 angepaßt ist, ist aus Fig. 4 gut ersichtlich. An dem Ende 10, welches dem kulissenseitigen Abschnitt 11 mit den beiden Gabelschenkeln 12 gegenüberliegt, ist ein stirnseitig offener senkrechter Schlitz 16 in den Verstellhebel 7 eingebracht, der durch einen in waagerechten, fluchtenden Bohrungen angeordneten Stift 17 überbrückt wird. So ist es möglich, das Ende der Anpreßfeder 8, bzw. den Bügel 9 an dem Ende 10 des Verstellhebels 7 einzuhaken.

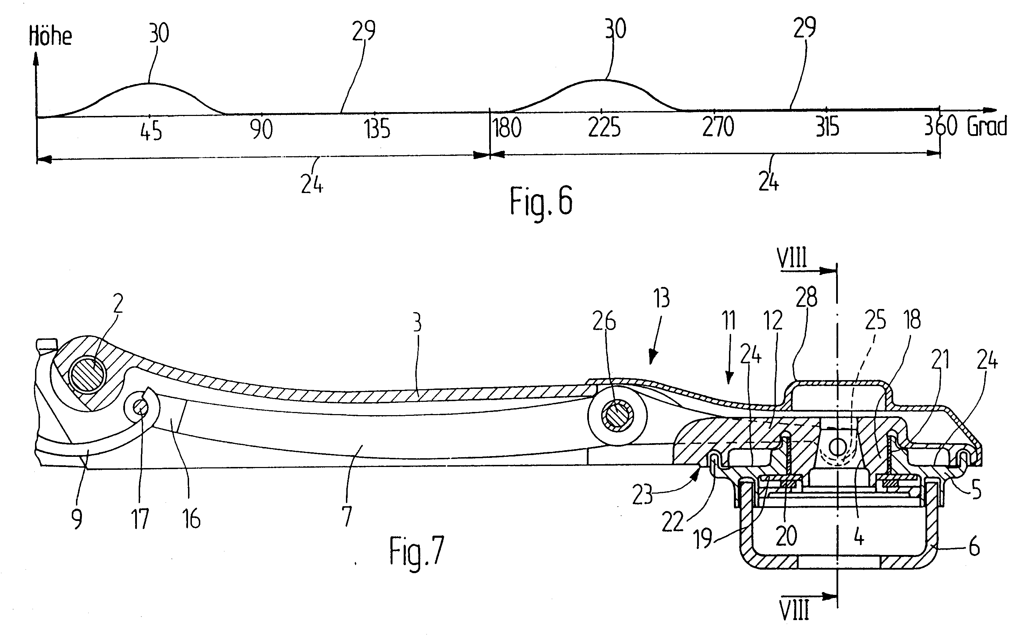

Aus der Fig. 5 ist der Aufbau der als Baueinheit vormontierten Scheibenwischvorrichtung deutlicher ersichtlich. Das Befestigungsteil 3 weist konzentrisch zu der Öffnung 4 für die Befestigung auf einer nicht dargestellten Wischerwelle einen nach unten abstehenden zylindrischen Ansatz 18 auf. Auf diesen zylindrischen Ansatz 18 ist von unten die aus einem Acetal-Copolymerisat (POM) hergestellte Kulisse 5, welche mit einer entsprechenden zentrischen zylindrischen Öffnung versehen ist, aufgesteckt und in axialer Richtung an diesem gehalten. Die axiale Sicherung der Kulisse 5 erfolgt hierbei mittels einer Scheibe 19, die verdrehsicher auf dem zylindrischen Ansatz 18 des Befestigungsteiles 3 angeordnet ist und mittels eines darunter in einer Ringnut des zylindrischen Ansatzes 18 festgelegten Sicherungsringes 20 in axialer Richtung gehalten ist. Um eine leichte relative Verdrehbarkeit der Kulisse 5 gegenüber dem Befestigungsteil 3 zu gewährleisten, ist zwischen der Kulisse 5 und dem zylindrischen Ansatz 18 eine Gleitbuchse 21 angeordnet. Die Ränder 22 und 23 sind miteinander korrespondierend labyrinthartig verzahnt und bilden somit eine Labyrinthdichtung. Diese Labyrinthdichtung verhindert den Zutritt von Schmutz in den zwischen der Kulisse 5 und dem Befestigungsteil 3 gebildeten Raum. Die Kulisse 5 trägt an ihrer Oberseite zwei in axialer Richtung wirkende Steuerkurven 24, wobei jeweils eine Steuerkurve 24 einem Gabelschenkel 12 des Verstellhebels 7 zugeordnet ist. Die beiden Steuerkurven 24 bilden eine kreisringförmige Bahn, welche konzentrisch zu der Öffnung 4, d.h. somit auch konzentrisch zu der geometrischen Achse der nicht dargestellten Wischerwelle, verläuft. Dabei sind die beiden Steuerkurven 24 zueinander synchron gestaltet. Sie sind zentralsymmetrisch angeordnet und im vorliegenden Fall um 180° versetzt. Der genaue Verlauf der Steuerkurven ist aus der in Fig. 6 gezeigten Abwicklung ersichtlich.

Jeder Gabelschenkel 12 des Verstellhebels 7 durchgreift mit seinem im wesentlichen axial abgewinkelten Ende einen Durchbruch 15 (Fig. 3) im Rücken des Befestigungsteiles 3 und liegt mit einem Gleitschuh 25 aus Polyamid von oben auf einer Steuerkurve 24 der Kulisse 5 auf. Damit die Gleitschuhe 25 permanent in Berührung mit den Steuerkurven 24 gehalten werden, ist das Schwenklager 26 des Verstellhebels 7 am Befestigungsteil 3 in einem, wenn auch geringen, Abstand über der Wirklinie 27 der Anpreßfeder 8 angeordnet.

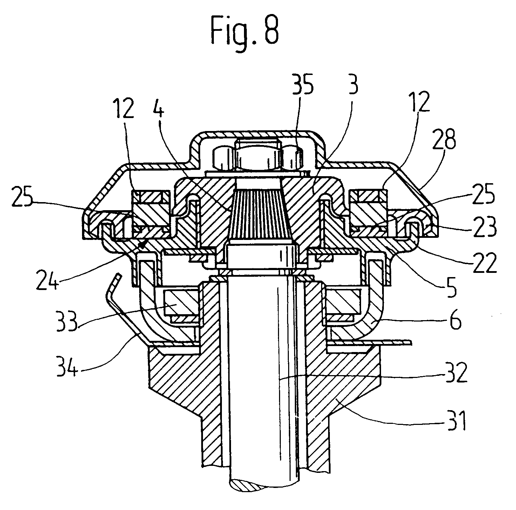

Zur Befestigung der vormontierten Baueinheit wird das Befestigungsteil 3 mit der konisch ausgebildeten Öffnung 4 in an sich bekannter Weise auf ein entsprechend konisch ausgebildetes Ende einer Wischerwelle aufgesteckt und mittels einer Befestigungsmutter verdrehfest an der Wischerwelle festgelegt. Bei dieser Montage wird gleichzeitig die Kulisse 5 mittels entsprechender Öffnungen bzw. Taschen an ihrer Unterseite mit den beiden Schenkeln des Halteblechs 6, welches, wie aus Fig. 8 ersichtlich, bereits ortsfest am Gehäuse 31 des Wischlagers vormontiert ist, form- und/oder kraftschlüssig in Eingriff gebracht. Dadurch wird sichergestellt, daß die gemeinsam mit dem Befestigungsteil 3 an der Wischerwelle festgelegte Kulisse 5 nicht gemeinsam mit dem Befestigungsteil 3 um die geometrische Achse der Wischerwelle verdreht werden kann. Eine zusätzliche Justierung der Kulisse ist nicht erforderlich.

Nach dem Befestigen der Scheibenwischvorrichtung auf der Wischerwelle wird abschließend eine Abdeckkappe 28 an dem Befestigungsteil 3 verrastet, welche den über der Kulisse 5 befindlichen Abschnitt des Befestigungsteiles 3 überdeckt. Damit ist einerseits ein visuell ansehnlicher Anblick gewährleistet und andererseits werden der kulissenseitige Abschnitt 11 des Verstellhebels 7 sowie die Durchbrüche 14 und 15, welche der Verstellhebel 7 durchgreift, vor dem Zutritt von Schmutz geschützt.

Diejenigen vorgesehenen technischen Mittel, welche eine Verdrehsicherung des Haltebleches 6 und damit der Kulisse 5 gegenüber der Karosserie bewirken, sind so ausgestaltet, daß sie die Kulisse 5 dem gewünschten Bewegungsablauf entsprechend ausrichten. Beim Betrieb des Scheibenwischers schwenkt der Wischarm 1 in einem vorbestimmten Winkelbereich um die Wischerwelle, wodurch das Wischblatt auf der zu reinigenden Scheibe pendelnd das vorgesehene Wischfeld überstreicht. Entsprechend dem gewünschten Verlauf der Anpreßkraft ist die Kulisse 5 so justiert, daß die Gleitschuhe 25 des Verstellhebels 7 ein Wellental 29 der Steuerkurve 24 durchfahren, wenn sich das Wischblatt direkt am Rand des Wischfeldes oder in dessen Nähe befindet. Demgegenüber fahren die Gleitschuhe 25 des Verstellhebels 7 einen Wellenberg 30 der Steuerkurve 24 ab, wenn das Wischblatt den mittleren Bereich des Wischfeldes überstreicht.

In der Fig. 5 ist eine Position der Scheibenwischervorrichtung dargestellt, bei welcher sich die Gleitschuhe 25 des Verstellhebels 7 in einem Wellental 29 der Steuerkurve 24 befinden. Beim Abfahren eines Wellenberges 30 der Steuerkurve 24 wird der Verstellhebel 7 mit seinem Ende 10 in Richtung der zu reinigenden Scheibe verschwenkt. Dadurch wird auch die Wirklinie 27 der Anpreßfeder 8 in Richtung auf die zu reinigende Scheibe verlagert. Durch die so veränderte Aufteilung der Kraftkomponenten der Anpreßfeder 8 wird die Anpreßkraft des Wischblattes auf die zu reinigende Scheibe vergrößert.

Bei der in Fig. 6 diagrammartig dargestellten Abwicklung der beiden Steuerkurven 24 sind auf der Abszissenachse die Winkelgrade und auf der Ordinatenachse die Höhe der Steuerkurven 24 abgetragen. Aus dem Verlauf der Wellenberge 30 und der Wellentäler 29 ist ersichtlich, daß die beiden Steuerkurven 24 zueinander synchron und zentralsymmetrisch mit einem Versatz von 180° angeordnet sind. Der Verlauf der Steuerkurven 24 gibt außerdem einen Hinweis darauf, wie sich die Anpreßkraft des Wischblattes auf die zu reinigende Scheibe beim Überstreichen des Wischfeldes verändert.

Das in den Fig. 7 und 8 gezeigte andere Ausführungsbeispiel einer erfindungsgemäßen Scheibenwischvorrichtung ist dem anhand der Fig. 1 bis 6 beschriebenen Ausführungsbeispiel sehr ähnlich. Deshalb trifft die bisherige Beschreibung im wesentlichen auch auf das Ausführungsbeispiel der Fig. 7 und 8 zu. Unterschiede zwischen den beiden Ausführungsbeispielen ergeben sich dadurch, daß in den Fig. 7 und 8 das Befestigungsteil 3 sehr flach gehalten ist, wodurch eine äußerst geringe Bauhöhe dieses Befestigungsteiles 3 verwirklicht wird. Die Abkröpfung bzw. Abstufung des Befestigungsteiles 3 im Bereich 13 fällt relativ geringfügig aus. Ebenso ist der zylindrische Ansatz 18 wesentlich flacher gehalten. Als Folge daraus sind die Enden der Gabelschenkel 12 des Verstellhebels 7 nicht axial abgebogen bzw. abgewinkelt, sondern sie sind lediglich etwas verdickt, um eine sinnvolle Befestigung der Gleitschuhe 25 an den Gabelschenkeln 12 zu ermöglichen. Es ist auch ersichtlich (insbesondere aus Fig. 8), daß die Oberseite des Befestigungsteiles 3 im kulissenseitigen Abschnitt 11 des Verstellhebels 7 derart profiliert ausgebildet ist, daß sich erhabene Teile der Oberseite des Befestigungsteiles 3 zwischen die beiden Gabelschenkel 12 des Verstellhebels 7 erstrecken.

Aus Fig. 8 ist deutlich erkennbar, daß das Gehäuse 31 eines Wischlagers, in welchem drehbar eine Wischerwelle 32 angeordnet ist, mittels einer Befestigungsmutter 33 an einem Teil 34 der Fahrzeugkarosserie ortsfest befestigt ist. Das Halteblech 6, welches formschlüssig mit der Kulisse 5 in Eingriff steht, ist ebenfalls mittels der Befestigungsmutter 33 karosseriefest arretiert. Dabei ist das Halteblech 6 so ausgerichtet, daß es gleichzeitig die Steuerkurven 24 der Kulisse 5, wie im vorangegangenen Ausführungsbeispiel, justiert. Die erfindungsgemäße Scheibenwischvorrichtung ist dadurch auf der pendelnd antreibbaren Wischerwelle 32 befestigt, daß das Befestigungsteil 3 mit der konischen Öffnung 4 auf das Ende der Wischerwelle 32 aufgesteckt und mittels der Befestigungsmutter 35 drehfest an der Wischerwelle 32 arretiert ist. Zur Erhöhung der Verdrehsicherheit weist das Ende der Wischerwelle 32 in bekannter Weise einen als Rändelkonus ausgebildeten Abschnitt 36 auf.

Die Funktion dieses Ausführungsbeispieles ist mit der des vorangegangenen Ausführungsbeispieles identisch und muß deshalb nicht nochmals beschrieben werden.

### Bezugszeichenliste

- 1: Wischarm
- 2: Schwenkachse
- 3: Befestigungsteil
- 4: Öffnung
- 5: Kulisse
- 6: Halteblech
- 7: Verstellhebel
- 8: Anpreßfeder
- 9: Bügel
- 10: Ende (des Verstellhebels)
- 11: (kulissenseitiger) Abschnitt (des Verstellhebels)
- 12: Gabelschenkel
- 13: Bereich
- 14: Durchbruch
- 15: Durchbruch
- 16: Schlitz
- 17: Stift
- 18: zylindrischer Ansatz
- 19: Scheibe
- 20: Sicherungsring
- 21: Gleitbuchse
- 22: (äußerer) Rand (der Kulisse)
- 23: Rand (des Befestigungsteiles)
- 24: Steuerkurve
- 25: Gleitschuh
- 26: Schwenklager
- 27: Wirklinie (der Anpreßfeder)
- 28: Abdeckkappe
- 29: Wellental
- 30: Wellenberg
- 31: Gehäuse
- 32: Wischerwelle
- 33: Befestigungsmutter
- 34: Teil (der Fahrzeugkarosserie)
- 35: Befestigungsmutter
- 36: Abschnitt (der Wischerwelle)

## Patentansprüche

1. Scheibenwischvorrichtung mit wischwinkelabhängiger Anpreßkraftverstellung, insbesondere für Kraftfahrzeuge, mit einem drehfest auf einer pendelnd antreibbaren Wischerwelle (32) zu befestigenden Befestigungsteil (3) und einem in Richtung auf die zu reinigende Scheibe schwenkbar an dem Befestigungsteil (3) angelenkten, ein Wischblatt tragenden Wischarm (1), an welchem das erste Ende einer das Wischblatt auf die Scheibe pressenden Anpreßfeder (8) festgelegt ist, deren das Wischblatt auf die Scheibe pressende Kraft über eine Verstelleinrichtung in Abhängigkeit vom Wischwinkel verändert wird, wobei die Verstelleinrichtung eine ortsfest zu montierende Kulisse (5) mit einer axial angeordneten Steuerkurve (24) und einen mittels eines Schwenklagers (26) im wesentlichen in Richtung auf die zu reinigende Scheibe schwenkbar an dem Befestigungsteil (3) gelagerten Verstellhebel (7) umfaßt, an dem das zweite Ende der Anpreßfeder (8) festgelegt ist und der mit dem kulissenseitigen Ende beim Betrieb des Scheibenwischers durch Abfahren der Steuerkurve (24) der Kulisse (5) verschwenkt wird, dadurch **gekennzeichnet**, daß die Kulisse (5) zwei zueinander synchrone, axial angeordnete Steuerkurven (24) aufweist, daß der kulissenseitige Abschnitt (11) des Verstellhebels (7) gabelförmig ausgebildet ist und daß jeweils ein Gabelschenkel (12) des Verstellhebels (7) mit der zugehörigen Steuerkurve (24) der Kulisse (5) in Wirkverbindung steht.

2. Scheibenwischvorrichtung nach Anspruch 1, dadurch **gekennzeichnet**, daß die Schwenkachse des Verstellhebels (7) mit dem Befestigungsteil (3) so angeordnet ist, daß zwischen ihr und der Wirklinie (27) der Anpreßfeder (8) bei jedem möglichen Wischwinkel ein Abstand besteht, der gewährleistet, daß die Gabelschenkel (12) des Verstellhebels (7) permanent gegen die Steuerkurven (24) der Kulisse (5) gedrängt werden.

3. Scheibenwischvorrichtung nach einem der vorhergehenden Ansprüche, dadurch **gekennzeichnet**, daß an den beiden Gabelschenkeln (12) des Verstellhebels (7) Gleitschuhe (25) angebracht sind, die auf den Steuerkurven (24) der Kulisse (5) aufliegen.

4. Scheibenwischvorichtung nach Anspruch 3, dadurch **gekennzeichnet**, daß die Gleitschuhe (25) aus einem Kunststoff, insbesondere aus einem Polyamid, und daß die Kulisse (5) oder zumindest die Steuerkurven (24) der Kulisse (5) aus einem dazu verschiedenen Kunststoff, insbesondere aus einem Acetal-Copolymerisat, bestehen.

5. Scheibenwischvorrichtung nach einem der vorhergehenden Ansprüche, dadurch **gekennzeichnet**, daß das Befestigungsteil (3) abgekröpft bzw. abgestuft ausgebildet ist und in dem Bereich (13) der Abkröpfung bzw. Abstufung einen Durchbruch (14) aufweist, daß der Verstellhebel (7) den Durchbruch (14) derart durchgreift, daß sich der gabelförmige Abschnitt (11) des Verstellhebels (7) an der oberen Seite des Befestigungsteiles (3) im Bereich der Steuerkurven (24) der Kulisse (5) zwei weitere Durchbrüche (15) befinden und daß die Gabelschenkel (12) des Verstellhebels (7) die Durchbrüche (15) durchgreifen und jenseits der Durchbrüche (15) in Wirkverbindung mit den Steuerkurven (24) der Kulisse (5) stehen.

6. Scheibenwischvorrichtung nach einem der vorhergehenden Ansprüche, dadurch **gekennzeichnet**, daß die im wesentlichen parallel zu der Oberseite des Befestigungsteiles (3) verlaufenden Gabelschenkel (12) des Verstellhebels (7) an ihrem Ende in Richtung auf die axial angeordneten Steuerkurven (24) der Kulisse (5) umgebogen bzw. abgewinkelt sind, wobei die Gleitschuhe (25) stirnseitig an den umgebogenen bzw. abgewinkelten Enden der Gabelschenkel (12) angebracht sind.

7. Scheibenwischvorrichtung nach einem der vorhergehenden Ansprüche, dadurch **gekennzeichnet**, daß das Befestigungsteil (3) und der Wischarm (1) mit der Anpreßfeder (8) und der Verstelleinrichtung des Anpreßdruckes, bestehend aus Verstellhebel (7), Kulisse (5) und evtl. einer Verdrehsicherung der Kulisse (5) eine vormontierte Baueinheit bilden.

8. Scheibenwischvorrichtung nach Anspruch 7, dadurch **gekennzeichnet**, daß das Befestigungsteil (3) einen konzentrisch zu der Öffnung (4) für die Befestigung des Befestigungsteiles (3) auf der Wischerwelle (32) angeordneten zylindrischen Ansatz (18) aufweist, auf welchem von unten die Kulisse (5) mit einer korrespondierenden Durchgangsöffnung gegenüber dem Befestigungsteil (3) relativ verdrehbar aufgesteckt ist, wobei die Kulisse (5) in axialer Richtung durch eine zum Befestigungsteile (3) verdrehfeste Scheibe (19) und einen darunter in einer Ringnut eingesetzten Sicherungsring (20) gesichert ist.

9. Scheibenwischvorrichtung nach einem der vorhergehenden Ansprüche, dadurch **gekennzeichnet**, daß die Steuerkurven (24) der Kulisse (5) konzentrisch zur geometrischen Achse der Öffnung (4) für die Befestigung auf der Wischerwelle (32) verlaufen, daß die Steuerkurven (24) zentralsymmetrisch mit einem Versatz von 180° zueinander angeordnet sind und daß die Gabelschenkel (12) des Verstellhebels (7) mit Bezug auf die Öffnung (4) diametral gegenüberliegend auf den Steuerkurven (24) aufliegen, wobei eine geringe, durch die jeweilige Kippstellung des Verstellhebels (7) hervorgerufene Abweichung unberücksichtigt bleibt.

10. Scheibenwischvorrichtung nach einem der vorhergehenden Ansprüche, dadurch **gekennzeichnet**, daß die Kulisse (5) über eine Labyrinthdichtung mit dem Befestigungsteil (3) in Wirkverbindung steht, wobei das Befestigungsteil (3) relativ verdrehbar zu der ortsfest zu montierenden Kulisse (5) ist.

## Claims

1. Windshield wiper device with contact pressure adjustment dependent on the wiping angle, in particular for motor vehicles, with an attachment piece (3) to be unrotatably attached to a wiper shaft (32) driven back and forth, and a wiper arm (1) articulated to the attachment piece (3) to pivot in the direction of the windshield being cleaned and bearing a wiper blade, to which wiper arm the first end of a contact spring (8) pressing the wiper blade onto the windshield is attached, the force of the spring pressing the wiper blade onto the windshield is changed by means of an adjusting device as a function of the wiping angle, wherein the adjusting device is comprised of a rocker arm (5) to be mounted in a fixed position with an axially located cam (24) and an adjusting lever (7), seated by means of a pivot bearing (26) essentially in the direction of the windshield to be cleaned, pivots on the attachment piece (3), to which lever (7) the second end of the contact spring (8) is attached and which will pivot with the end of the rocker arm during operation of the windshield wiper by moving down the cam (24) of the rocker arm (5), characterized in that the rocker arm (5) has two mutually synchronous, axially positioned cams (24), in that the section (11) of the adjusting lever (7) on the side of the rocker arm is of fork-like design, and in that each fork leg (12) of the adjusting lever (7) is in operative engagement with the associated cam (24) of the rocker arm (5).

2. Windshield wiper device as claimed in Claim 1,
characterized in that the pivot axis of the adjusting lever (7) is positioned with the attachment part (3) so that there is a spacing between it and the actuation line (27) of the contact spring (8) for every possible wiping angle, said spacing ensuring that the fork legs (12) of the adjusting lever (7) are pressed permanently against the cams (24) of the rocker arm (5).

3. Windshield wiper device as claimed in any one of the preceding claims,
characterized in that slide shoes (25) are located at the two fork legs (12) of the adjusting lever (7), said shoes resting on the cams (24) of the rocker arm (5).

4. Windshield wiper device as claimed in Claim 3,
characterized in that the slide shoes (25) are made of a plastic, in particular of a polyamide, and in that the rocker arms (5) or at least the cams (24) of the rocker arms (5) consist of a different plastic, in particular of an acetal copolymerizate.

5. Windshield wiper device as claimed in any one of the preceding claims,
characterized in that the attachment part (3) is crimped or is of stepped design and has a hole (14) in the vicinity (13) of the crimping or stepping, in that the adjusting lever (7) moves through the hole (14) in a manner such that at the fork-like section (11) of the adjusting lever (7) on the upper side of the attachment part (3) in the region of the cams (24) of the rocker arm (5) two additional leads (15) are located, and in that the fork legs (12) of the adjusting lever (7) pass through the holes (15) and are in operative engagement with the cams (24) of the rocker arm (5) on the far side of the leads (15).

6. Windshield wiper device as claimed in any one of the preceding claims,
characterized in that the fork legs (12) of the adjusting lever (7) running essentially parallel to the upper side of the attachment piece (3) are curved or angled at the end of the lever in the direction of the axially positioned cams (24) of the rocker arms (5), with the slide shoes (25) attached to the front side to the curved or angled ends of the fork legs (12).

7. Windshield wiper device as claimed in any one of the preceding claims,
characterized in that the attachment part (3) and the wiper arm (1), together with the contact spring (8) and the adjusting device for the contact pressure, consisting of adjusting lever (7), rocker arm (5) and possibly a torsion lock on the rocker arm (5), all form a premounted assembly.

8. Windshield wiper device as claimed in Claim 7,
characterized in that the attachment part (3) has a cylindrical lug (18) located concentric to the opening (4) for attachment of the attachment part (3) on the wiper shaft (32), on which, from below, the rocker arm (5) is slipped on by way of a corresponding passage so as to be rotatable with respect to the attachment part (3), wherein the rocker arm (5) is secured in the axial direction by a washer (19) unrotatably attached to the attachment part (3) and by a securing ring (20) installed beneath it in a ring groove.

9. Windshield wiper device as claimed in any one of the preceding claims,
characterized in that the cams (24) of the rocker arm (5) run concentrically to the geometric axis of the opening (4) for attachment to the wiper shaft (32), in that the cams (24) are arranged centrally symmetrical to each other with an offset of 180°, and in that the fork legs (12) of the adjusting lever (7) rest on the cams (24) diametrically opposite each other with respect to the opening (4), and a small deviation which is due to the particular tip position of the adjusting lever (7) is not taken into account.

10. Windshield wiper device as claimed in any one of the preceding claims,
characterized in that the rocker arms (5) are in operative engagement with the attachment part (3) by means of a labyrinth seal, and the attachment part (3) can rotate relative to the rocker arm (5) fixed in position.

## Revendications

1. Dispositif essuie-glace avec réglage de la force de pression dépendant de l'angle de balayage, en particulier pour véhicules automobiles, comportant un élément de fixation (3) à fixer solidairement en rotation sur un arbre d'essuie-glace (32), susceptible d'être entraîné en un mouvement pendulaire, ainsi qu'un bras de balayage (1) articulé sur l'élément de fixation (3), de manière à pouvoir pivoter en direction de la vitre à nettoyer, portant un balai, sur lequel bras de balayage est fixée la première extrémité d'un ressort de pression (8), pressant le balai sur la vitre, dont la force, pressant le balai sur la vitre, est modifiée au moyen d'un dispositif de réglage en fonction de l'angle de balayage, le dispositif de réglage comportant une coulisse (5), à monter en un point fixe avec une came de commande (24), disposée axialement et un levier de réglage (7), monté sur l'élément de fixation (3), pouvant pivoter, au moyen d'un palier de pivotement (26), sensiblement en direction de la vitre à nettoyer, levier de réglage sur lequel est fixée la deuxième extrémité du ressort de pression (8) et qui est pivoté avec l'extrémité côté coulisse, pendant le fonctionnement de l'essuie-glace, par descente de la came de commande (24) de la coulisse (5), caractérisé en ce que la coulisse (5) comporte deux cames de commande (24) disposées axialement, synchronisées entre elles, en ce que la portion (11) côté coulisse du levier de réglage (7) est en forme de fourche et en ce qu'une branche (12) de la fourche du levier de réglage (7) est en liaison active avec la came de commande (24) correspondante de la coulisse (5).

2. Dispositif essuie-glace selon la revendication 1, caractérisé en ce que l'axe de pivotement du levier de réglage (7) avec l'élément de fixation (3) est disposé de manière qu'entre ledit axe et la ligne d'action (27) du ressort de pression (8) se trouve, pour chaque angle de balayage possible, une distance qui garantit que les branches (12) de la fourche du levier de réglage (7) sont pressées en permanence contre les cames de commande (24) de la coulisse (5).

3. Dispositif essuie-glace selon l'une des revendications précédentes, caractérisé en ce que sur les deux branches (12) de la fourche du levier de réglage (7) sont montés des patins (25), qui reposent sur les cames de commande (24) de la coulisse (5).

4. Dispositif essuie-glace selon la revendication 3, caractérisé en ce que les patins (25) sont faits d'une matière plastique, en particulier d'un polyamide, et en ce que la coulisse (5) ou au moins les cames de commande (24) de la coulisse (5) sont faites d'une matière plastique différente de la première, en particulier dans un copolymérisat d'acétal.

5. Dispositif essuie-glace selon l'une des revendications précédentes, caractérisé en ce que l'élément de fixation (1) est coudé ou étagé et présente un ajour (14) dans la zone (13) du coude ou du gradin, en ce que le levier de réglage (7) traverse l'ajour (14) de telle sorte que la portion (11) en forme de fourche du levier de réglage (7), sur le côté supérieur de l'élément de fixation (3), dans la région des cames de commande (24) de la coulisse (5), se trouvent deux autres a jours (15), et en ce que les branches (12) de la fourche du levier de réglage (7) traversent les a jours (15) et sont en liaison active, de l'autre côté des a jours (15), avec les cames de commande (24) de la coulisse (5).

6. Dispositif essuie-glace selon l'une des revendications précédentes, caractérisé en ce que les branches (12) de la fourche du levier de réglage (7), sensiblement parallèles à la face supérieure de l'élément de fixation (3), sont repliées ou coudées, à leur extrémité, en direction des cames de commande (24) disposées axialement de la coulisse (1), les patins (25) étant montés frontalement aux extrémités repliées ou coudées des branches (12) de la fourché.

7. Dispositif essuie-glace selon l'une des revendications précédentes, caractérisé en ce que l'élément de fixation (3) et le bras de balayage (1) forment une unité de construction prémontée avec le ressort de pression (8) et le dispositif de réglage de la pression de pressage, constitué du levier de réglage (7), de la coulisse (5) et éventuellement d'un blocage en rotation de la coulisse (5).

8. Dispositif essuie-glace selon la revendication 7, caractérisé en ce que l'élément de fixation (3) comporte un appendice (18) cylindrique, disposé concentriquement àl'ouverture (4) pour la fixation de l'élément de fixation (3) sur l'arbre d'essuie-glace (32), appendice sur lequel la coulisse (5) est emboîtée, à partir du bas, avec une ouverture de passage correspondante de manière à pouvoir tourner relativement par rapport à l'élément de fixation (3), la coulisse (5) étant bloquée dans la direction axiale par une rondelle (19), fixe en rotation p rapport à l'élément de fixation (3) et par un anneau de blocage (20), inséré au-dessous, dans une rainure annulaire.

9. Dispositif essuie-glace selon l'une des revendications précédentes, caractérisé en ce que les cames de commande (24) de la coulisse (5) s'étendent concentriquement à l'axe géométrique de l'ouverture ( ) pour la fixation sur l'arbre d'essuie-glace (32), en ce que les cames de commande (24) sont disposées l'une par rapport à l'autre dans une symétrie centrale avec un décalage de 180° et en ce que les branches (12) de la fourche du levier de réglage (7) reposent sur les cames de commande (24), diamétralement opposées, par rapport àl'ouverture (4), un écart r duit, provoqué par la position de basculement respective du levier de réglage (7), n'étant pas pris

10. Dispositif essuie-glace selon l'une des revendications précédentes, caractérisé en ce que la coulisse (5) est en liaison active avec l'élément de fixation (3), par une étanchéité à labyrinthe, l'élément de fixation (3) pouvant tourner relativement par rapport à la coulisse (5) à monter en un point fixe.
